# EUROPEAN PATENT APPLICATION

(11) **EP 4 837 678 A1**
(43) Date of publication of application: **11.11.2026**
(21) Application number: 25174754.9
(22) Date of filing: 07.05.2025
(51) Int. Cl.: B23B 51/06

(54) **TWIST DRILL TOOL**

(71) Applicant: WALTER AG, 72072 Tübingen (DE)
(72) Inventor: Siegfried, Rogallat, 72072 Tübingen (DE); Strojny, Michal, 72072 Tübingen (DE)
(74) Representative: Sandvik

(57) **Abstract**

Twist drill tool for metal cutting comprising a body. The body comprises a front section (15), a transition section (16), a rear section (17) and one or more cutting edges, which define a cutting circle with a cutting radius (22). Furthermore, the body comprises one or more chip flutes (6), which each extends axially rearward along a respective helix around the central longitudinal axis (4), wherein, at the cutting radius (22), each chip flute (6) has a flute pitch. Furthermore, the body comprises one or more internal coolant channels (13), which each extends rearward along a respective helix around the central longitudinal axis (4), wherein, at a center of the coolant channel (13), each coolant channel (13) has a channel pitch. The channel pitch of each coolant channel (13) is a constant. In the rear section (17), the flute pitch of each chip flute (6) is a constant rear flute pitch, wherein the rear flute pitch is equal to the channel pitch. In the front section (15), the flute pitch of each chip flute (6) is a constant front flute pitch, which is different from the rear flute pitch. In the transition section (16), the flute pitch of each chip flute (6) is a varying transition flute pitch, wherein at the rear end of the transition section (16), the transition flute pitch is equal to the rear flute pitch, at a front end of the transition section (16), the transition flute pitch is equal to the front flute pitch, and in a point between the rear end and the front end of the transition section (16), the transition flute pitch is a compensation flute pitch. The rear flute pitch is smaller than one of the front flute pitch and the compensation flute pitch, and larger than the other one of the front flute pitch and the compensation flute pitch.

## Description

### Technical field

The present invention relates to a twist drill tool for metal cutting.

### Background

A wide range of components are machined from many different types of material, such as metal, composites or combinations thereof. Accordingly, a variety of different cutting tools, and in particular twist drills have been developed. Twist drills are a type of drills that are provided with chip flutes in form radially outward open helical grooves. The chip flutes typically extend from a respective cutting edge in a drill point to a rear shank. At the cutting edge, a helix angle of the chip flute corresponds to a rake angle. In order to increase performance of a twist drill, it is known to provide the twist drill with coolant channels. The coolant channel can be internal, wherein they extend helically inside portions left between the chip flutes, sometimes referred to as "lands". Each coolant channel ends in an outlet opening in the drill point.

Conventionally, such known twist drills are produced from cylindrical blanks with standard diameters and coolant channels following a standard helix. The cylindrical surface of the blank is grinded to create the helical chip flutes and the lands. The helix of the chip flute is selected to match the given standard helix of the coolant channel of the blank in order to ensure that enough material remains between coolant channels and adjacent the chip flutes after grinding the chip flutes. Thus, the helix angle for the chip flutes is determined based on the given helix of the coolant channels.

A problem with producing twist drills from such standardized blanks is that it is sometimes desired to have a rake angle at the cutting edge which is different from the helix angle determined by the coolant channels. If the desired rake angle is smaller than that helix angle, additional grinding is necessary, which is costly and time consuming. If the desired rake angle is larger than that helix angle, a blank with a larger diameter than the finished twist drill has to be used in order to start with a blank that has coolant channels following a large enough helix. However, such large diameter blanks then require extensive grinding down to the desired smaller diameter of the finished twist drill.

### Summary

An object of the present invention is to at least partly obviate the above mentioned problem. This object is achieved according to the invention by means of a twist drill tool according to claim 1.

A proposed twist drill tool for metal cutting comprises a body, which body has a front end and a central longitudinal axis extending rearward from the front end, wherein the body comprises
- a front section extending rearward from the front end of the body,
- a transition section extending rearward from a rear end of the front end section, and
- a rear section extending rearward from a rear end of the transition section,
- one or more cutting edges at the front end of the body, which define a cutting circle with a cutting radius,
- one or more outlet openings at the front end,
- one or more chip flutes, which, from a respective cutting edge, each extends axially rearward along a respective helix around the central longitudinal axis to the rear end of the rear section, wherein, at the cutting radius, each chip flute has a flute pitch, and
- one or more internal coolant channels, which, from a respective outlet opening, each extends rearward along a respective helix around the central longitudinal axis to a rear end of the rear section, wherein, at a center of the coolant channel, each coolant channel has a channel pitch,
wherein,
- from the outlet opening to the rear end of the rear section, the channel pitch of each coolant channel, is constant, and
- in the rear section, the flute pitch of each chip flute (6) is a constant rear flute pitch, wherein the rear flute pitch is equal to the channel pitch,
- in the front section, the flute pitch of each chip flute is a constant front flute pitch, which is different from the rear flute pitch, and wherein
- in the transition section, the flute pitch of each chip flute is a varying transition flute pitch, wherein
   - at the rear end of the transition section, the transition flute pitch is equal to the rear flute pitch,
   - at a front end of the transition section, the transition flute pitch is equal to the front flute pitch,
   - in a point between the rear end and the front end of the transition section, the transition flute pitch is a compensation flute pitch, wherein the rear flute pitch is
      ▪ smaller than one of the front flute pitch and the compensation flute pitch, and
      ▪ larger than the other one of the front flute pitch and the compensation flute pitch.

A helix can be described by a helix angle (α), a pitch (p) and a diameter (d), wherein the parameters satisfy the equation: $α = arctan \left(\frac{πd}{p}\right)$

In twist drill tools produced from blanks with pre-fabricated helical coolant channels, helical chip flutes are typically grinded at a larger diameter than the coolant channels. Generally, two different helixes, which extend round a common longitudinal axis at different diameters, must have the same pitch in order to maintain a constant distance to each other. When two helixes at different diameters have the same pitch, as per the equation above, they necessarily also have different helix angles.

In conventional twist drill tools, the chip flutes are typically grinded such that the coolant channels extend centered in the portions left between two adjacent the chip flutes. Thereby the coolant channels and the chip flutes have a constant distance to each other along the longitudinal axis. This is achieved by grinding the chip flutes along a helix which has a pitch equal to that of the coolant channels. Thus, the helix angles of the chip flutes is given by the pitch of the coolant channels.

Should a chip flute instead be grinded with a helix angle that would match for example a desired rake angle, the pitch of the chip flute would differ from that of the coolant channels. Thereby the distance between the chip flute and the coolant channel will vary along the longitudinal axis, which in turn could weaken the twist drill tool, or the chip flute cannot be grinded without intersecting and damaging the coolant channel.

Instead, according to the present invention, the chip flutes are grinded to extend along different helixes in different sections of the twist drill tool. In a rear section, similar to prior art twist drill tools, the pitch of the chip flute is a rear flute pitch, which is constant and equal to the pitch of the coolant channel. In a front section, the chip flute has a front flute pitch, which is constant and different from the rear flute pitch in the rear section. This front flute pitch can be selected to achieve a desired helix angle, for example corresponding to a desired rake angle. Finally, in a transition section, which extends from the rear section to the front section, the pitch of the chip flute is a varying transition flute pitch.

In the transition section, the transition flute pitch changes from the rear flute pitch in a rear end to the front flute pitch in a front end, wherein, in a point between the rear end and the front end of the transition section, the transition flute pitch is a compensation flute pitch. The rear flute pitch is smaller than one of the front flute pitch and the compensation flute pitch, and larger than the other one of the front flute pitch and the compensation flute pitch. In other words, the rear flute pitch in the rear section has a value in between the value of front flute pitch in the front section and the value of the compensation pitch. Thanks to the compensation pitch, the transition pitch both decreases and increases in the transition section. This allows for grinding the chip flute in the transition section such that the coolant channels remain sufficiently centered in the portions left between two adjacent chip flutes. Thus, according to the inventive compensation pitch, it is possible to transition the pitch of the rear section to the pitch of the front section while preventing the distance between the chip flutes and the coolant channels from becoming too small. Consequently, excessive grinding of standard blanks and/or large stocks of standard blanks with coolant channels having different helix angles can be avoided.

The present invention relates to a twist drill tool for metal cutting, such as chip removing metal cutting. The twist drill tool comprises a body, which has a front end, and a central longitudinal axis extending rearward from the front end. The central longitudinal axis defines an axial direction and a radial direction.

The body comprises a front section extending rearward from the front end, a transition section extending rearward from a rear end of the front section, and a rear section extending rearward from a rear end of the transition section.

Optionally, the body comprises a shaft which extends axially rearward from a rear end of the rear section. Through the shaft, the twist drill tool is connectable to a machine spindle, or to an adapter for a machine spindle. The machine spindle typically is part of a machine, for example a CNC machine.

The twist drill tool is rotatable, for example by the machine spindle, around the central longitudinal axis in a direction of rotation. The direction of rotation is the direction that the twist drill tool is rotated during normal cutting operation, wherein features of the twist drill tool are rotationally leading or trailing relative to the direction of rotation. The twist drill tool is typically operated with feed in the axial direction only.

At the front end, the body is provided with one or more cutting edges, which define a cutting circle. The cutting circle is a circle cut by the one or more cutting edges when the twist drill tool is rotated one complete revolution around the axis of rotation. The radius of the circle is a cutting radius. The cutting radius corresponds to a cutting diameter, which is two times the cutting radius. Preferably, the cutting diameter is at least 0,5mm and at most 32mm. Twist drill tools within this range are common for metal cutting and suitable for the present invention. According to an embodiment, the front section of the twist drill tool comprises a drill point. The one or more cutting edges may be formed at the intersection of a forwardly facing axial clearance surface and a rake surface.

Preferably, the twist drill tool is a one-piece integral unit, which sometimes is referred to as a "solid round tool". According to embodiments, the twist drill tool in form of a solid round tool includes the shaft and the drill point.

Preferably, the twist drill tool comprises a wear resistant material such as for example coated or non-coated cemented carbide, cermet, ceramic, CBN or steel.

The body comprises one or more outlet openings at the front end and one or more internal coolant channels. The one or more coolant channels, from a respective outlet opening in the front section, each extends rearward along a respective helix around the central longitudinal axis to a rear end of the rear section. According to an embodiment, each outlet opening is located in the axially forward facing clearance surface, for example rotationally behind one respective cutting edge. Preferably, each coolant channel is connectable to a coolant supply at the rear end of the rear section. The coolant fluid may be any suitable fluid such as coolant and/or lubricant in form of a liquid, a gas, or a mixture thereof.

The body comprises one or more chip flutes, which, from a respective cutting edge, each extends axially rearward along a respective helix around the central longitudinal axis to the rear end of the rear section. The chip flutes typically extend from a respective cutting edge in a drill point. Preferably, each chip flute is configured to transport chips cut by the cutting edge axially rearward away from the cutting edge. Preferably, the chip flutes are recessed in a peripheral surface of the body. Preferably, the body comprises one or more axially extending lands, which each extend rotationally behind a respective chip flute. Each land forms an intermediate portion behind the chip flute. In embodiments with two or more chip flutes, each intermediate portion extends between two rotationally consecutive chip flutes and borders both of them.

Preferably, the body comprises one, two, three or four chip flutes, wherein two are preferred. Preferably, the body comprises an equal number of chip flutes as cutting edges. Preferably the body comprises an equal number of outlet openings and coolant channels as cutting edges. Each coolant channel is preferably situated inside a respective one of the intermediate portions. Preferably, a number of the one or more of the cutting edges, chip flutes, outlet openings and internal coolant channels each are exactly two. This is the most common type of twist drill tool.

Each coolant channel and each chip flute extends along a respective helix around the central longitudinal axis. The helix of a coolant channel and a helix of a chip flute can for example be found by flowing corresponding points along the extension of the coolant channel and the chip flute, respectively. For example, a center line of the coolant channel and, at the cutting radius, a central line of chip flutes. Consequently, the helix of the coolant channel and the helix of the chip flutes extend at different radiuses of the body, wherein the chip flutes are located at larger radius.

Generally, the pitch of a helical coolant channel and the pitch of a helical chip flute is to be understood as the axial distance covered by one complete rotation around the central longitudinal axis of the coolant channel and the chip flute, respectively. The helix angle is the angle formed between the helix and the central longitudinal axis. Each coolant channel has a channel pitch measured axially at the center of the coolant channel. Each chip flute has flute pitch measured axially at the cutting radius.

The channel pitch is constant along the extension of the coolant channel from the outlet opening to the rear end of the rear section. According to preferred embodiments with two or more coolant channels, a value of the constant channel pitch is the same for all coolant channels and in all axial positions.

The flute pitch of each chip flute has different values in different sections of the body. According to preferred embodiments with two or more chip flutes, in any axial position, the value of the flute pitch is the same for all chip flutes.

In the rear section, the pitch of each chip flute is a constant rear flute pitch, wherein the rear flute pitch is equal to the channel pitch. Preferably, the rear flute pitch is at least 5mm and at 150mm. Twist drill tools within this range are common for metal cutting and suitable for the present invention.

In the front section, the pitch of each chip flute is a constant front flute pitch, which is different from the rear flute pitch. Preferably, the front flute pitch differs from the rear flute pitch by at least +/-20% of the rear pitch. The design of the present twist drill tool is increasingly advantageous for increasing pitch differences.

According to a preferred embodiment, the front flute pitch is smaller than the rear flute pitch. This is advantageous since it avoids excessive grinding of large diameters blanks in the prior art. Alternatively, the front flute pitch is larger than the rear flute pitch. Preferably, the front flute pitch is at least 0,7 times and/or at most 1,5 times the rear flute pitch. Pitch differences exceeding these values are more difficult to achieve without risking a too short distance between the coolant channel and the chip flute.

According to an embodiment, the front flute pitch corresponds to a front flute helix angle, and each cutting edge has a radially outer rake surface formed by a front portion of the respective chip flute, wherein the radially outer rake surface has a rake angle, which is equal to the front flute helix angle. Thereby additional grinding of the chip flute surface to match a desired rake angle can be avoided. Optionally, each cutting edge comprises a radially inner rake surfaces, for example a thinning surface.

Optionally, the front section includes or corresponds to the drill point. According to an embodiment, an axial length of the front section is 0,8 - 1, 5 of the cutting diameter. Thereby, a chip flute surface having the desired helix angle of sufficient length for a rake surface is provided while at the same time it is ensured that the distance between the chip flute and the coolant channel is sufficient over the length of the front section.

In the transition section, the flute pitch of each chip flute is a varying transition pitch. According to an embodiment, the transition section comprises a rear, first transition section, wherein the transition flute pitch monotonically transitions from the rear pitch to the compensation flute pitch, and a front, second transition section, wherein the transition flute pitch monotonically transitions from the compensation flute pitch to the front flute pitch. The monotone change facilitates grinding. The monotone change can be of any suitable kind, for example linear or polynomic. A polynomic, for example a quadratic or cubic, monotone change is advantageous for keeping the axial length where the distance between the coolant channels and the chip flutes is small as short as possible. In alternative embodiments, the pitch varies non-monotonically with several alternating portions of increase and decrease.

According to an embodiment, an axial length of each of the first transition section and the second transition section is 0,8 - 1,5 times the cutting diameter. Thereby it is ensured that the axial distance is long enough to allow a smooth transition to the compensation pitch, and short enough to ensure that a distance between the chip flute and the coolant channel remains sufficient in the respective section. Preferably, the axial length of the first transition section and the second transition section are equal. Preferably, the rear flute pitch is half of the sum of the front flute pitch and the compensation flute pitch +/- 10%. When a monotone increase and a monotone decrease of the transition pitch takes place symmetrically and over equal axial lengths, calculations for the grinding operation are facilitated.

According to an embodiment, the transition section comprises a compensation section extending from the first transition section to the second transition section, wherein the compensation flute pitch is constant in the compensation section. Preferably, an axial length of the compensation section is at most 1,5 times the cutting diameter. It is advantageous to keep the compensation pitch constant over an axial length. Thereby the first and second transition section can be shorter such that an axial length where the distance between the coolant channels and the chip flutes is small is kept as short as possible.

Alternatively, the transition pitch has the compensation pitch in a single axial position. The length of compensation section approaches zero and corresponds to a cross section plus tolerances. This is especially advantageous in embodiments where the helix angle in the front section is smaller than in the rear section.

Preferably, a minimal wall thickness between each chip flute and an adjacent coolant channel is at least 5% of the cutting diameter. Thereby the strength of the twist drill tool is sufficient for most operations.

According to an aspect of the present invention, the present invention relates to a set of twist drill tools with different cutting diameters. The channel pitch of all the several twist drill tools is equal, the rear flute pitch of all the several twist drill tools is equal, and the front flute pitch of all the several twist drill tools is equal. Thus, all twist drill tools of the set have the same rake angle and cutting geometry even though they have different diameters. Due to the inventive design of the varying transition pitch, the twist drill tools can be produced from standard blanks without additional grinding of the rake surfaces.

### Brief description of the drawings

In the following, example embodiments will be described in greater detail and with reference to the accompanying drawings, in which:
Fig. 1 is a perspective view of a first embodiment of a twist drill tool according to the present invention;
Fig. 2 is a top view of the twist drill tool of Fig. 1;
Fig. 3 is an enlarged, perspective view of a front portion of the twist drill tool of Fig. 1;
Fig. 4 is a cross section of the twist drill tool of Fig. 1 as indicated in Fig. 3;
Fig. 5 is a schematic view indicating the helixes of a coolant channel and a chip flute in a twist drill tool according to Fig. 1;
Fig. 6 is a side view of the twist drill tool of Fig. 1 indicating axial sections;
Fig. 7 shows diagrams of the helix angle and the pitch of a chip flute of the twist drill tool of Fig. 1;
Fig. 8 shows diagrams of the helix angle and the pitch of a chip flute of the twist drill tool according to a second embodiment of the present invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

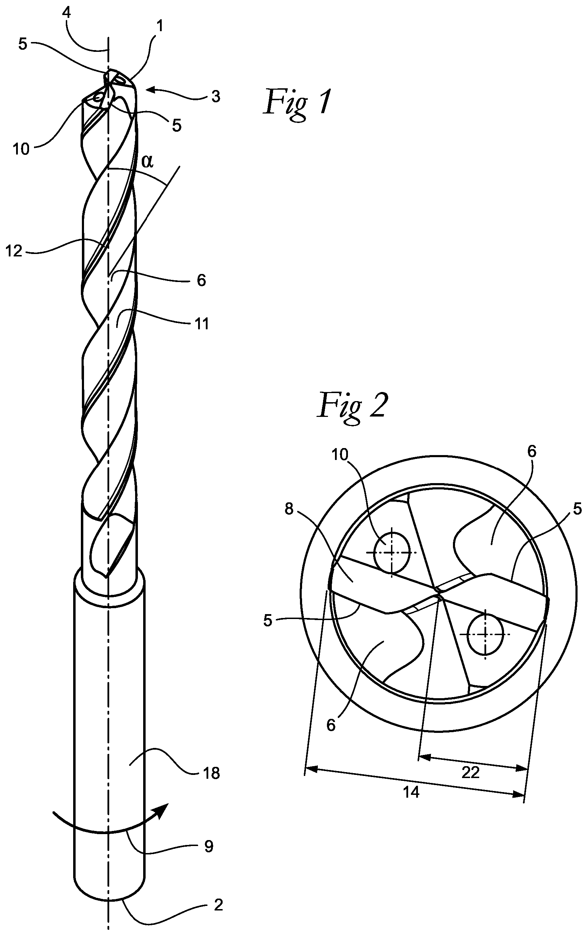

In Figs. 1 - 7 a first embodiment of the twist drill tool according to present invention is described. The twist drill tool comprises a body which has a front end 1, a rear end 2, and a central longitudinal axis 4 extending rearward from the front end 1 to the rear end 2. The twist drill tool is a one-piece integral unit and comprises coated cemented carbide.

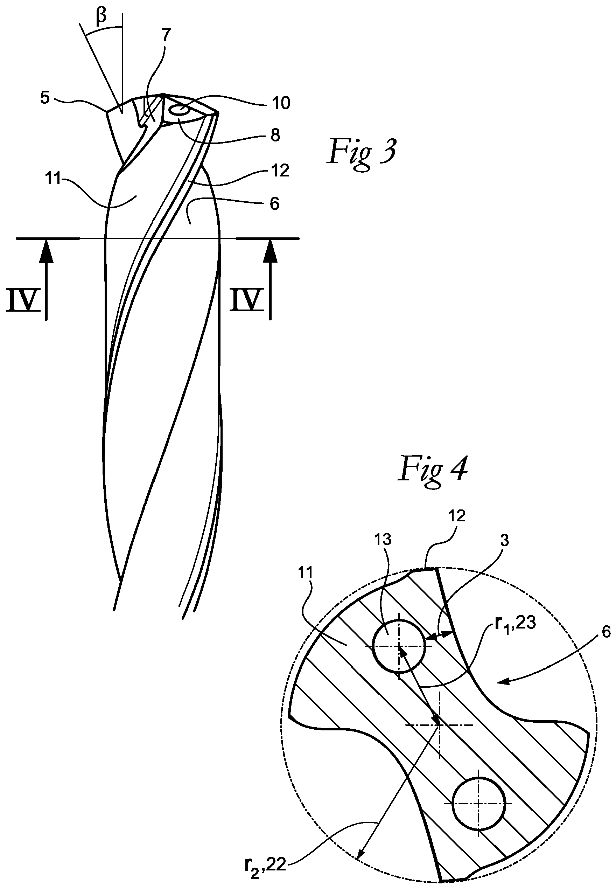

The body comprises two cutting edges 5 at the front end 1. The body comprises two chip flutes 6, wherein each chip flute 6 extends axial rearward from one respective cutting edge 5. The cutting edges 5 are formed at an intersection of an axial clearance surface 8, which is part of a forwardly facing front end surface, and a rake surface 7, c.f. Fig. 3. A radially outer portion of the rake surface 7 is formed by an axially front portion of the chip flute 6, and a radially inner portion of the rake surface 7 is formed by thinning surfaces.

The body of the twist drill tool of the example first embodiment comprises a drill point, and a front end of the drill point is the front end 1 of the body. The cutting edges 5, the clearance surfaces 8 and the rake surfaces 7 are comprised in the drill point. The cutting edges 5 define a cutting circle with a cutting diameter 14, c.f. Fig. 2. The cutting diameter 14 is for example measured as a distance between the radially outermost points of the two cutting edges 5. In the example embodiment, the cutting diameter is 4,8mm. The cutting diameter 14 is equal to two times a cutting radius 22.

The body comprises a shaft 18, which extends forward from the rear end 2. By means of the shaft 18, the twist drill tool is connectable to a machine spindle, or to an adapter for a machine spindle, for during operation rotate the twist drill tool around the central longitudinal axis 4 in a direction of rotation 9.

Each chip flute 6 is grinded into the body forming a radially outward open helical groove. Each chip flute 6 follows a helix curve around the central longitudinal axis 4.

The body comprises two intermediate portions 11, which each extend rotationally behind one respective chip flute 6. The intermediate portions 11 are formed from material left when grinding the chip flutes 6. The chip flutes 6 and the intermediate portions 11 are arranged alternating in the rotational direction 9. Each intermediate portion 11 has a radially outer surface in form of a land, which land, at a rotationally leading edge, has a margin surface 12.

Two outlet openings 10 are provided in the clearance surface 8 of the drill point, wherein each outlet opening 10 is located rotationally behind one respective cutting edge 5. The twist drill tool comprises two coolant channels 13, which each extend axially rearward from one respective outlet opening 10 and inside one respective intermediate portion 11.

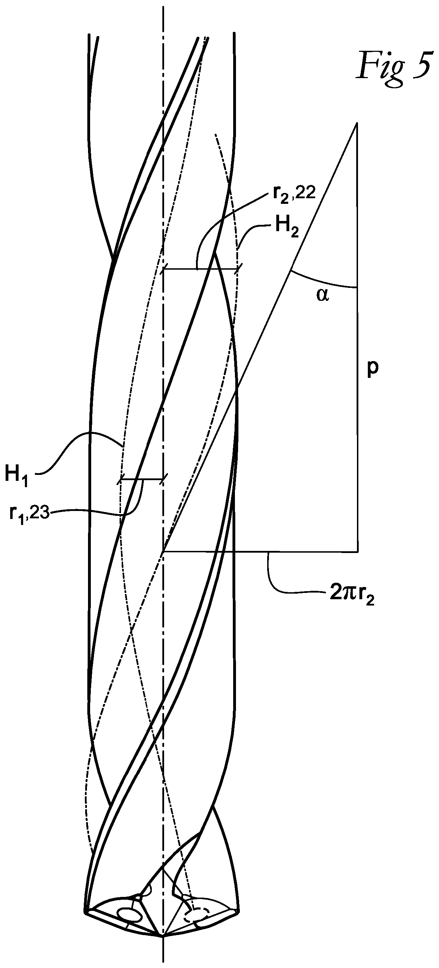

Each coolant channel 13 and each chip flute 6 extends along a respective helix around the central longitudinal axis 4. Fig. 5 is a schematic view of a portion of the twist drill tool, wherein the helix of one of the coolant channels 13 and the helix of one of the chip flutes 6 are indicated as H₁ and H₂, respectively. The helix H₁ of the coolant channel 13 can be found as a center line of the coolant channel 13. The helix H₂ of the chip flute 6 can be found as a central line at the cutting radius 22. Thus, the pitch of the chip flutes 6 is to be measured at the cutting radius 22 (r₂), and the pitch of the coolant channels 13 at their center line at radius 23 (r₁). Consequently, the helix curves of the coolant channels 13 and the chip flutes 6 have different diameters and are located at different radial distances from the central longitudinal axis 4.

Both helixes H₁, H₂, have a respective helix angle α. With knowledge of the helix angle α, a corresponding pitch p at a selected radius r can be calculated using the formula presented above. Thus, in each axial position, each coolant channel 13 and each chip flute 6 has a helix angle α, which corresponds to a pitch p at a selected respective radius.

Both coolant channels 13 extend along a respective helix H₁ with constant radius r₁, which radius r₁ is the same for both and in the example embodiment 1,35mm. The radius r₁ of the helix H₁ of each coolant channel 13 is the distance 23 from the central longitudinal axis 4 to the center of the coolant channel 13, c.f. Fig. 4.

Both chip flutes 6 extend along a respective helix H₂. The twist drill tool has a cutting radius 22, which in the example embodiment is 2,4mm. Thus, the cutting radius 22 is larger than the radius 23 of the helix of coolant channels 13. In Fig. 5, the relationship between a helix angle α and the pitch p at the cutting radius 22 is shown for the helix H₂ of one of the chip flutes 6. As can be seen, the pitch p is the axial distance covered by one complete rotation around the central longitudinal axis of the chip flute 6. The helix angle α is the angle formed between the helix and the central longitudinal axis 4.

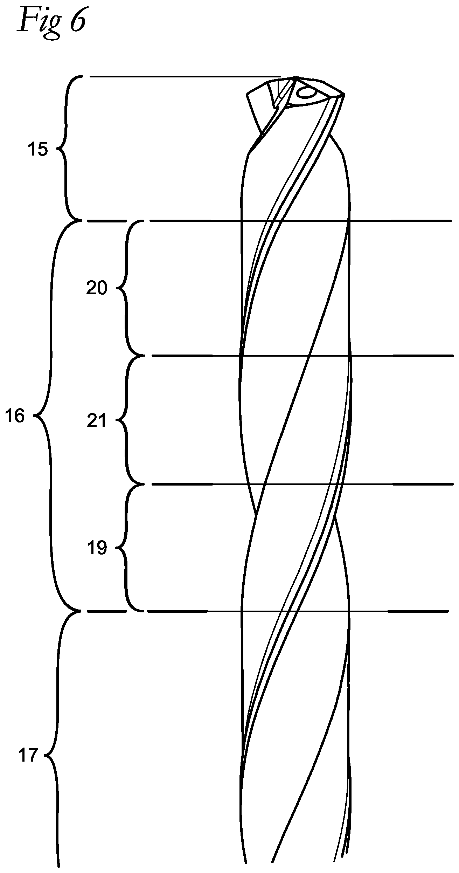

The body comprises a front section 15 extending rearward from the front end 1, a transition section 16 extending rearward from a rear end of the front section 15, and a rear section 17 extending rearward from a rear end of the transition section 16, c.f. Fig. 6. In the described first embodiment, the drill point is comprised in the front section 15 and the shaft 18 extends rearward from a rear end of the rear section 17.

Each helical coolant channel 13 has a pitch in form of a channel pitch at the radius 23, r₁. The channel pitch is constant along the extension of the coolant channel 13 from the outlet opening 10 to the rear end of the rear section 17. The value of the constant channel pitch is the same for both coolant channels 13 and in all axial positions. In the example embodiment, the value of the channel pitch is 32,7mm at the radius r₁ of 1,35mm. The coolant channel has a constant helix angle α of 14,5°.

Each chip flute 6 has a flute pitch. The flute pitch of each chip flute 6 has different values in different sections 15, 16, 17 of the body. In the described first example embodiment, in any selected axial position, the value of the flute pitch is the same for both chip flutes 6.

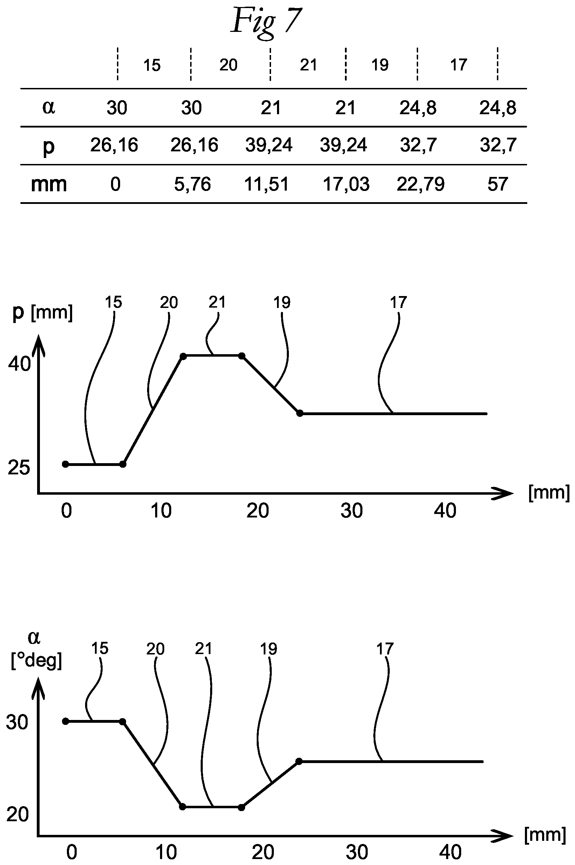

The variation of the helix angle and the flute pitch of the chip flute 6 of the first embodiment in the sections 15 - 21 is shown the table and the diagrams of Fig. 7. The values of the pitch at the cutting radius 22 and the helix angle of the chip flute 6 is plotted against an axial distance from front end 1. In the table, specific values are shown in positions where two adjacent sections meet.

In the rear section 17, the flute pitch of each chip flute 6 is a constant rear flute pitch, which is equal to the channel pitch. Thus, the rear flute pitch of the example embodiment is 32,7mm. In the rear section, the helix angle α of the chip flute is 24,8°.

In the front section 15, the flute pitch of each chip flute 6 is a constant front flute pitch, which is different from the rear flute pitch. In the example embodiment, the front flute pitch is 26,16mm. Thus, the front flute pitch is 0,8 times the rear flute pitch. The front flute pitch of 26,16mm corresponds to a front flute helix angle of 30°. A rake angle β of the each cutting edge 5 at the radially outer portion of the rake surface is equal to the front flute helix angle. An axial length of the front section 15 from a tip of the cutting edges 5 to the rear end of the front section is 5,76mm, which is 1,2 times the cutting diameter 14 of 4,8mm.

In the transition section 16, the flute pitch of each chip flute 6 is a varying transition pitch. At the rear end of the transition section 16, the transition flute pitch is equal to the rear flute pitch, and at a front end of the transition section16, the transition flute pitch is equal to the front flute pitch. In a point between the rear end and the front end of the transition section, the transition flute pitch is a compensation flute pitch. In the example first embodiment, the compensation flute pitch is 39,24mm. Thus, the rear flute pitch of 32,7mm is larger than the front flute pitch of 26,16mm, and smaller than the compensation flute pitch of 39,24mm. The rear flute pitch is half of the sum of the front flute pitch and the compensation flute pitch. The transition section 16 comprises a rear, first transition section 19, wherein the transition flute pitch monotonically transitions from the rear pitch to the compensation flute pitch, and a front, second transition section 20, wherein the transition flute pitch monotonically transitions from the compensation flute pitch to the front flute pitch, wherein both monotone changes are linear. The transition section 16 comprises a compensation section 21 extending from the first transition section 19 to the second transition section 20, wherein the flute pitch is the compensation flute pitch and constant. Corresponding value for the helix angle α in the compensation section 21 is 21,0°.

An axial length of both the first and the second transition sections 19, 20 is 5,76mm, which is 1,2 times the cutting diameter. An axial length of the compensation section 21 is 5,52mm.

With this design of the chip flutes 6, it is achieved that a minimal distance 3 from the chip flute 6 to the coolant channel is at most 1,5mm, which is less than 5% of the cutting diameter, c.f. Fig. 4.

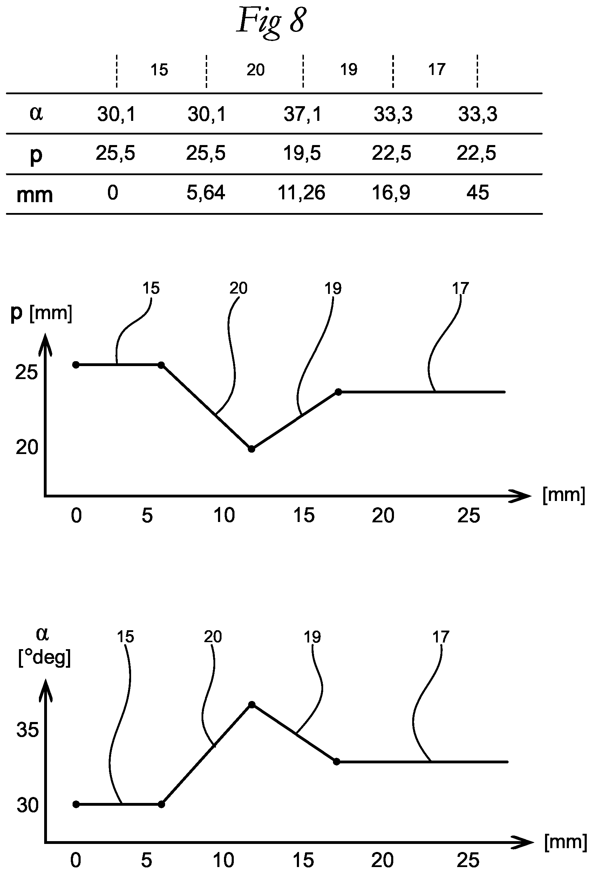

The twist drill tool according to a second embodiment differs from the twist drill tool according to the first embodiment in that the cutting diameter is 4,7mm and in the design of the chip flute, why the following description is limited thereto. Fig. 8 corresponds to Fig. 7 and shows the variation of the helix angle and the flute pitch of the chip flute 6 of the second embodiment at the cutting radius 22 of 2,35mm. As can be seen, in the rear section 17, the rear flute pitch is constant and 22,5mm, and the corresponding helix angle α is 33,3°. In the front section 15, the rear flute pitch is constant and 22,5mm and the corresponding helix angle helix angle α is 33,3°.

In the transition section 16, at the rear end, the transition flute pitch is equal to the rear flute pitch, and, at a front end, the transition flute pitch is equal to the front flute pitch. The front flute pitch corresponds to a front flute helix angle of 30°. In a point between the rear end and the front end of the transition section, the compensation flute pitch is 19,5mm. Thus, in contrast to the first embodiment, the rear flute pitch is smaller than the front flute pitch and larger than the compensation flute pitch. In addition, the transition section 16 of the second embodiment lacks the compensation section 21 of the first embodiment. Instead, the rear, first transition section 19 extends rearward from a rear end of the front, first transition section 20. The front section 15, the first and second transition sections 20, 19 each have an axial length of 5,64mm.

The front flute pitch corresponds to a front flute helix angle of 30°. Thus, both embodiments have the same rake angle even though they have different cutting diameter 14. Both embodiments constitutes twist frill tools of an inventive twist drill tool set.

## Claims

1. A twist drill tool for metal cutting comprising a body, which body has a front end (1) and a central longitudinal axis (4) extending rearward from the front end (1), wherein the body comprises
- a front section (15) extending rearward from the front end (1) of the body,
- a transition section (16) extending rearward from a rear end of the front end section (15), and
- a rear section (17) extending rearward from a rear end of the transition section (16),
- one or more cutting edges (5) at the front end (1) of the body, which define a cutting circle with a cutting radius (22),
- one or more outlet openings (10) at the front end (1),
- one or more chip flutes (6), which, from a respective cutting edge (5), each extends axially rearward along a respective helix around the central longitudinal axis (4) to the rear end of the rear section, wherein, at the cutting radius (22), each chip flute (6) has a flute pitch, and
- one or more internal coolant channels (13), which, from a respective outlet opening (10), each extends rearward along a respective helix around the central longitudinal axis (4) to a rear end of the rear section, wherein, at a center of the coolant channel (13), each coolant channel (13 has a channel pitch
wherein,
- from the outlet opening (10) to the rear end of the rear section, the channel pitch of each coolant channel (13), is constant, and
- in the rear section (17), the flute pitch of each chip flute (6) is a constant rear flute pitch, wherein the rear flute pitch is equal to the channel pitch,
**characterized in that**
- in the front section (15), the flute pitch of each chip flute (6) is a constant front flute pitch, which is different from the rear flute pitch,
- in the transition section (16), the flute pitch of each chip flute (6) is a varying transition flute pitch, wherein
- at the rear end of the transition section (16), the transition flute pitch is equal to the rear flute pitch,
- at a front end of the transition section (16), the transition flute pitch is equal to the front flute pitch,
- in a point between the rear end and the front end of the transition section (16), the transition flute pitch is a compensation flute pitch, wherein the rear flute pitch is
▪ smaller than one of the front flute pitch and the compensation flute pitch, and
▪ larger than the other one of the front flute pitch and the compensation flute pitch.

2. The twist drill tool according to claim 1, wherein the front flute pitch differs from the rear flute pitch by at least +/-20% of the rear pitch.

3. The twist drill tool according to claim 2, wherein the front flute pitch is at least 0,7 times and/or at most 1,5 times the rear flute pitch.

4. The twist drill tool according to any of the preceding claims, wherein the front flute pitch is smaller than the rear flute pitch.

5. The twist drill tool according to any of the preceding claims, wherein the rear flute pitch is half of the sum of the front flute pitch and the compensation flute pitch +/- 10%.

6. The twist drill tool according to any of the preceding claims, wherein
- the front flute pitch, at the cutting radius (22), corresponds to a front flute helix angle, and
- each cutting edge (5) has a radially outer rake surface formed by a front portion of the respective chip flute (6), wherein the radially outer rake surface (7) has a rake angle, which is equal to the front flute helix angle.

7. The twist drill tool according to any of the preceding claims, wherein an axial length of the front section (15) is 0,8 - 1, 5 of the cutting diameter (14).

8. The twist drill tool according to any of the preceding claims, wherein the transition section (16) comprises
- a rear, first transition section (19), wherein the transition flute pitch monotonically transitions from the rear pitch to the compensation flute pitch, and
- a front, second transition section (20), wherein the transition flute pitch monotonically transitions from the compensation flute pitch to the front flute pitch.

9. The twist drill tool according to claim 8, wherein an axial length of each of the first transition section (19) and the second transition section (20) is 0,8 - 1, 5 times the cutting diameter.

10. The twist drill tool according to claim 9, wherein the axial length of the first transition section (19) and the second transition section (20) are equal.

11. The twist drill tool according to any claim 8 - 10, wherein the transition section (16) comprises a compensation section (21) extending from the first transition section (19) to the second transition section (20), and the compensation flute pitch is constant in the compensation section (21).

12. The twist drill tool according to claim 11, wherein an axial length of the compensation section (21) is at most 1,5 times the cutting diameter (14).

13. The twist drill tool according to any of the preceding claims, wherein a number of the one or more of the cutting edges (5), chip flutes (6), outlet openings (10) and internal coolant channels (13) each are exactly two.

14. The twist drill tool according to any of the preceding claims, wherein a minimal wall thickness (3) between each chip flute (6) and an adjacent coolant channel is at least 5% of the cutting diameter (14).

15. A set of twist drill tools comprising several twist drill tools according to any of the preceding claims, wherein
- each of the several twist drill tools has a different cutting diameter,
- the channel pitch, of all the several twist drill tools is equal,
- the rear flute pitch of all the several twist drill tools is equal, and
- the front flute pitch of all the several twist drill tools is equal.
